# EUROPEAN PATENT APPLICATION

(11) **EP 4 456 494 A1**
(43) Date of publication of application: **30.10.2024**
(21) Application number: 24171868.3
(22) Date of filing: 23.04.2024
(51) Int. Cl.: H04L 41/0631, H04L 41/0654, H04L 41/149, H04L 41/16, H04L 43/04, H04L 41/50, H04L 41/5067, H04L 43/16, H04L 41/5019, H04L 41/5009, H04L 9/40

(54) **FEATURE IDENTIFICATION OF AN ISSUE OF AN APPLICATION SESSION**

(30) Priority: 28.04.2023 US 202363499054 P; 20.09.2023 US 202363584095 P; 28.03.2024 US 202418620686
(71) Applicant: Juniper Networks, Inc., Sunnyvale, CA 94089 (US)
(72) Inventor: PANNU, Navraj, Sunnyvale, 94089 (US); KUMAR, Prashant, Sunnyvale, 94089 (US); JIANG, Jie C, Sunnyvale, 94089 (US); GHANNAD, Mohammad Zohoorian, Sunnyvale, 94089 (US); SAFAVI, Ebrahim, Sunnyvale, 94089 (US)
(74) Representative: D Young & Co LLP

(57) **Abstract**

Feature identification of an issue of an application session: A network management system (NMS) is described that determines a cause or contributor of an issue of an application session or predicts an issue with the application session and invokes one or more actions to remedy or prevent the issue. NMS is configured to determine one or more network features that cause and/or contribute to an issue of an application session that has already occurred (referred to herein as "reactive issue determination") and/or predict an issue with an application session and one or more network features that impact the performance of the application session (referred to herein as "predictive issue determination"), and invoke one or more actions to remedy or prevent the issue, in accordance with one or more techniques of this disclosure.

## Description

### PRIORITY

This application claims the benefit of US Patent Application No. 18/620,686, filed 28 March 2024, which claims the benefit of US Provisional Patent Application No. 63/584,095, filed 20 September 2023, and US Provisional Patent Application No. 63/499,054, filed 28 April 2023, the entire content of each application is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "Wi-Fi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network. In the case of a client device running a cloud-based application, such as voice over Internet Protocol (VoIP) applications, streaming video applications, gaming applications, or video conference applications, data is exchanged during an application session from the client device through one or more APs and one or more wired network devices, e.g., switches, routers, and/or gateway devices, to reach the cloud-based application server.

### SUMMARY

Particular aspects are set out in the appended independent claims. Various optional embodiments are set out in the dependent claims. In general, this disclosure describes one or more techniques for a network management system (NMS) to identify one or more network features causing and/or contributing to an issue of an application session and invoke one or more actions to remedy or prevent the issue, in accordance with one or more techniques of this disclosure. During an application session for a cloud-based application (e.g., a VoIP or video conference call, a streaming video viewing session, or a gaming session), a client device running the application exchanges data through one or more access point (AP) devices, one or more switches at a wired network edge, and one or more network nodes of a core network to reach a cloud-based application server that hosts the application provided by a third-party application service provider. The application service provider may collect data on the performance of the application (referred to herein as "application performance data"), such as latency, bandwidth audio quality, video quality, etc. When a user experiences problems with the performance of the application, the user may flag a problem (e.g., poor quality or failure) with a particular application session. Typically, the application service provider may use the application performance data to determine whether the application is a cause of the problem. While the application performance data may provide information on the quality of an application session or indicate a failure of the application session, the application performance data is not sufficient to determine the underlying causes of user-experienced problems with the performance of the application, such as issues caused by features of the network.

In accordance with the disclosed techniques, the NMS is configured to determine one or more network features that cause and/or contribute to an issue of an application session that has already occurred (referred to herein as "reactive issue determination") and/or predict an issue with an application session and one or more network features that impact the performance of the application session (referred to herein as "predictive issue determination"), and invoke one or more actions to remedy or prevent the issue, in accordance with one or more techniques of this disclosure.

To reactively determine the cause of an issue of an application session, the NMS may combine (e.g., as a function of time or other association) application performance data of an application session obtained from the application service provider and network data obtained from one or more network devices associated with the application session. Based on the application performance data and/or the network data, the NMS may identify at least one failure condition of the application session. For example, the NMS may compare the application performance data (e.g., latency, bandwidth, packet loss, etc.) of the application session with an upper or lower threshold that, if satisfied, indicates an issue with the application session. The NMS may indicate a sufficient and/or necessary relation of the at least one failure condition of the application session with a performance of a network feature determined from the network data (e.g., wireless network performance, wired network performance, VPN sessions, etc.) to determine one or more network features that caused or contributed to the at least one failure condition. For example, the NMS may relate a latency issue of the application session with a wireless network performance of an access point (e.g., determined from Received Signal Strength Indicator (RSSI) values indicating the signal strength of a client device connected to the access point) associated with the application session because a poor wireless network performance of the access point may be a cause or contributor to the latency issue.

The NMS may compare the network data from the network device with a threshold (e.g., RSSI above or below a predefined RSSI value) that, if satisfied, may indicate an issue with the wireless network performance of the network device, and thus the wireless network performance of the network device is determined to be the network feature that is the cause or contributor to the application performance issues. In some examples, the thresholds may be obtained from machine learning models, rather than ad-hoc rules as a possible efficient approximation to the machine learning methods to minimize confirmation bias. The machine learning model or data analysis can also determine if the threshold chosen is sufficient to cause the failure condition. In response to determining the network feature that caused or contributed to the at least one failure condition, the NMS may invoke an action to remedy the issue, such as generating a notification to an administrator device that identifies the network feature that is the cause or contributor to the issue of the application session or a remedial action for the issue, or automatically reconfiguring one or more components of the network devices in the network to correct or mitigate the issue.

To predict an issue with an application session, the NMS may predict one or more application performance metrics of an application session that may indicate a predicted issue with the application session and one or more network features that impact the performance of the application session. For example, the NMS may obtain network data from one or more network devices associated with an application session over a first period of time (e.g., historical network data). The NMS may train a predictive model based on the network data obtained over the first period of time to predict application performance metrics for the application session and identify one or more network features that impact the application performance metrics. The predictive model may include, for example, supervised learning models using decision trees and gradient boosting methods, neural networks, generative pretrained transformers (GPTs), or other types of learning models. The NMS may then obtain network data from the one or more network devices associated with the application session over a second, subsequent period of time (e.g., current network data) and apply the network data to the predictive model, which outputs one or more predicted application performance metrics of the application session, which may be indicative of an application performance issue, and one or more network features that impact the application performance metrics. Based on the one or more predicted application performance metrics and one or more network features that impact the application performance metrics, the NMS may invoke an action, such as generating a notification to an administrator device that identifies a cause or contributor of the predicted issue of the application session or a preventative action for the predicted issue, or automatically reconfiguring one or more components of the network devices to prevent the predicted issue.

The disclosed techniques may provide one or more technical advantages and practical applications. For example, by combining application performance data with network data associated with an application session, the NMS may reactively determine the underlying cause of an issue with the application session, such as issues caused by the network of the application session that are not determined from application performance data alone. Moreover, by leveraging a predictive model to predict one or more application performance metrics and one or more network features that impact the application performance metrics, the computing system may predict future application performance issues or failures or predict if a network can provide adequate services for the application, and may proactively invoke an action to avoid or mitigate the impact of the issues or failures experienced by a user of the application such as generating a notification indicating predicted issues with the performance of the application or network and/or providing recommendations to configure the network to be "application-ready."

In one example, the disclosed techniques describe a network management system comprising a memory and one or more processors coupled to the memory and configured to: obtain, from an application server, application performance data of an application session;
obtain, from one or more network devices associated with the application session, network data; combine the application performance data with the network data; identify, based on the application performance data or network data, at least one failure condition of the application session; determine one or more network features that caused the at least one failure condition; and invoke, based on the determined one or more network features that caused the at least one failure condition, an action to remedy the at least one failure condition of the application session.

In another example, the disclosed techniques describe a network management system comprising a memory and one or more processors coupled to the memory and configured to: obtain network data from one or more network devices associated with an application session over a first period of time; train a predictive model based on the network data to predict at least one failure condition of the application session and one or more network features that impact the predicted at least one failure condition; apply network data from the one or more network devices obtained over a second, subsequent period of time, to the predictive model to predict the at least one failure condition of the application session and the one or more network features that impact the predicted at least one failure condition; and invoke, based on the predicted at least one failure condition and the one or more network features that impact the predicted at least one failure condition, an action to prevent the predicted at least one failure condition of the application session.

In another example, the disclosed techniques describe a method comprising obtaining, by a computing system, network data from one or more network devices associated with an application session over a first period of time. The method also includes training, by the computing system, a predictive model based on the network data to predict at least one failure condition of the application session and one or more network features that impact the predicted at least one failure condition. The method further includes applying, by the computing system, network data from the one or more network devices obtained over a second, subsequent period of time to the predictive model to predict the at least one failure condition of the application session and the one or more network features that impact the predicted at least one failure condition. Additionally, the method includes invoking, by the computing system and based on the predicted at least one failure condition of the application session and the one or more network features that impact the predicted at least one failure condition, an action to prevent the at least one failure condition of the application session.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system in which a network management system identifies one or more contributing features of an issue of an application session and invokes one or more actions to remedy or prevent the issue, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3A is a block diagram of an example network management system configured to identify one or more contributing features of an issue with an application session and invoke one or more actions to remedy or prevent the issue, in accordance with one or more techniques of the disclosure.
FIG. 3B is a block diagram of the application issue identification module of the network management system in more detail, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIGS. 6A-6C illustrate examples of outputs of the predictive model, in accordance with the techniques of this disclosure.
FIG. 7 illustrates an example of a relation between the performance of an application session and one or more VPN sessions operating concurrently with the application session, in accordance with techniques described in this disclosure.
FIG. 8 is a flowchart illustrating an example operation of reactive issue determination, in accordance with one or more techniques of the disclosure.
FIG. 9 is a flowchart illustrating an example operation of predictive issue determination, in accordance with one or more techniques of the disclosure.

### DETAILED DESCRIPTION

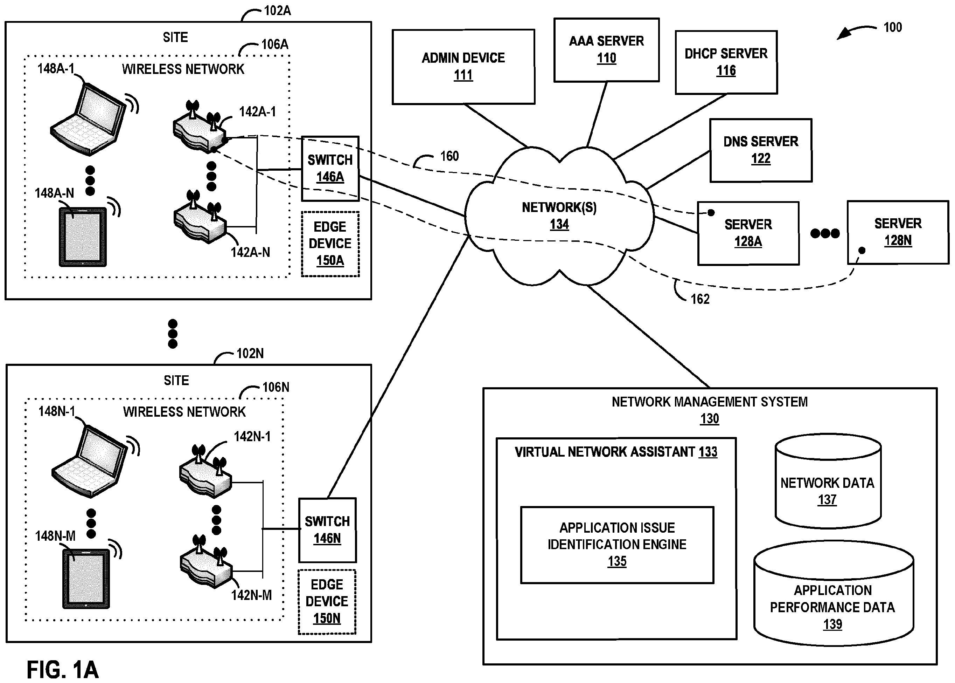

FIG. 1A is a block diagram of an example network system 100 in which a network management system (NMS) 130 determines a cause or contributor of an issue of an application session or predicts an issue with an application session and invokes one or more actions to remedy or prevent the issue, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown) within the wired network edge. For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or enterprise AP, a router, or any other device that is connected to the wired network and is capable of providing wireless network access to client devices within the site. References to "N" or "M" may represent any number. References to "N" for different elements need not be the same number. Similarly, references to "M" for different elements need not be the same number.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers, application servers, and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / short messaging service (SMS) messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The admin device 111 may comprise IT personnel and/or administrator computing device associated with one or more of sites 102 and/or switches 146 at the wired network edge. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to corresponding edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137 received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wired or wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. As further described below, VNA 1330 may also predict issues of an application session, in accordance with one or more techniques of the disclosure. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause or contributor of error conditions detected or predicted from the streams of network data 137. If the root cause or contributor may be automatically resolved, VNA 133 may invoke one or more corrective actions to correct the root cause or contributor of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects, and/or receives network data 137, which may take the form of data extracted from messages, counters, and statistics, for example. The network data may include a plurality of states or parameters indicative of one or more aspects of wireless network performance, such as service level expectation/experience (SLE) metrics (e.g., RSSI, jitter, transmission bytes, radio utilization, total number of clients per AP, number of APs per site), events, etc. In some examples, network data 137 may include information associated with one or more virtual private network (VPN) sessions. Information associated with a VPN session may include, for example, a location of a client device and a location of a VPN server of the VPN session, and/or a distance between the client device and the VPN server. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

One or more of servers 128 may include application servers that provide cloud-based applications. The cloud-based applications may include, for example, video conferencing applications, gaming applications, or other applications. UEs 148 may establish application sessions with application servers via network devices of network system 100 (e.g., APs 142, switches 146, etc.). For example, in a client-to-cloud application session topology of application session 160, a client device 148A-1 may interface with a wireless network 106A, which in turn may be in communication with a wired network. The wired network may be in communication with a WAN that may interface with a service provider network provided by an Internet service provider (ISP), such as network 134, which in turn provides connectivity to a third-party application server, e.g., server 128A, which hosts an application accessible by the client device.

A user of client device 148A-1 may experience issues in the performance of application session 160. Typically, when a user experiences problems with the performance of the application session, the user may flag a problem (e.g., poor quality or failure) with a particular application session. An application service provider may use application performance data associated with the application session to determine a cause of the problem. For example, the application performance data may include latency, bandwidth, audio in/out, video in/out, screen share in/out, packet loss, bit rate, resolution, frames per second, feedback from users, or any data associated with the performance of an application session. While the application performance data alone may provide information on the quality of an application session or indicate a failure of the application session, an application service provider for the application is unable to determine a root cause or contributor to the application performance issue, such as issues caused by the network, and/or to remedy or prevent the issues caused by the network.

In accordance with one or more techniques of this disclosure, NMS 130 is configured to determine one or more network features causing or contributing to an issue of an application session that has already occurred (referred to herein as "reactive issue determination") and/or predict an issue with an application session and one or more network features that impact the performance of an application session (referred to herein as "predictive issue determination"), and invoke one or more actions to remedy or prevent the issue, in accordance with one or more techniques of this disclosure.

To perform reactive issue determination, application issue identification engine 135 may obtain application performance data of an application session from an application server or application service provider and obtain network data of one or more network devices associated with the application session. For example, client device 148A-1 may exchange data, via application session 160, through one or more AP devices 142 (e.g., AP device 142A-1), one or more switches 146 (e.g., switch 146A) at the wired network edge, and one or more nodes within network 134 (e.g., routers, switches, controllers, gateways, and the like) with a cloud-based application server (e.g., server 128A) that hosts a cloud based application (e.g., a VoIP or video conference call, a streaming video viewing session, or a gaming session). Application issue identification engine 135 may obtain application performance data associated with application session 160 from application server 128A or another computing device of an application service provider of the application hosted on application server 128A. As described above, application performance data may include information indicating the performance of an application session, such as latency, bandwidth, audio in/out, video in/out, screen share in/out, packet loss, bit rate, resolution, frames per second, feedback from users, etc. Application issue identification engine 135 may obtain application performance data on-demand, periodically, and/or intermittently. The application performance data may be stored in a database or other storage media, such as application performance data 139 ofNMS 130.

Application issue identification engine 135 may also obtain network data of network devices associated with application session 160. In this example, application issue identification engine 135 may obtain network data from AP 142A-1, switch 146A, and/or network nodes in network 134 that are associated with application session 160. As described above, network data may include, for example, data indicative of one or more aspects of the network, such as one or more service level expectation (SLE) metrics (e.g., RSSI, jitter, transmission bytes, radio utilization, total number of clients per AP, number of APs per site, etc.), events, information associated with one or more VPN sessions (e.g., location of client device and VPN server or distance between the client device and VPN server), and/or other information indicating the performance or other characteristic of the network. The network data may be stored in a database or other storage media, such as network data 137 ofNMS 130.

Application issue identification engine 135 may combine the application performance data 139 with network data 137 associated with application session 160. For example, application issue identification engine 135 may combine the application performance data 139 with network data 137 based on a timestamp of the data, an identifier associated with the data (e.g., device address (MAC address, IP address), organization or site identifier), or other association between the application performance data 139 and the network data 137, or a combination of the above.

Based on the application performance data 139 and/or the network data 137 associated with application session 160, application issue identification engine 135 may identify at least one failure condition, e.g., an issue, with application session 160. For example, application issue identification engine 135 may compare the application performance data 139 with a network community, or application recommended threshold that, if satisfied, indicates an issue with application session 160. For instance, application issue identification engine 135 may compare latency information from application performance data 139 associated with application session 160 with a threshold (e.g., latency value greater than a predefined latency threshold) and determine, based on the comparison of the latency information with the threshold, that application session 160 has a latency issue.

Application issue identification engine 135 may relate the at least one failure condition of application session 160 (e.g., latency issue) with a performance of one or more network features to determine the one or more network features that caused or contributed to the at least one failure condition. Network features may include features of the network for the application session that are indicative of the performance or other characteristic of the network, such as Received Signal Strength Indicator (RSSI) values, number of APs per site, number of clients per AP, radio channel, transmission bytes, etc. determined from the network data. As one example, application issue identification engine 135 may relate the latency issue of application session 160 with the wireless network performance of AP 142A-1 determined from RSSI values of wireless signals detected by AP 142A-1. In this example, application issue identification engine 135 may compare RSSI values indicating the signal strength of UE 148A-1 connected to AP 142A-1 with a generally accepted threshold (e.g., RSSI values below -80 dB). If the threshold is satisfied, application issue identification engine 135 may determine that AP 142A-1 had a weak connection to UE 148A-1 that contributed to the poor wireless network performance, and is therefore the network feature that is the cause of the latency issue of application session 160.

In some examples, application issue identification engine 135 may relate a latency issue of application session 160 with information associated with a VPN session operating concurrently with application session 160, e.g., VPN session 162. Information associated with a VPN session may include, for example, a location of a client device (e.g., 148A-1) and a location of VPN server (e.g., server 128N). Application issue identification engine 135 may determine, based on the location of client device 148A-1 and the location of VPN server 128N, a distance from client device 148A-1 to VPN server 128A, referred to herein as "VPN server distance." In this example, application issue identification engine 135 may compare the VPN server distance from client device 148A-1 to server 128N with a threshold (e.g., VPN server distance greater than a predefined distance) that, if satisfied, indicates the VPN server distance of the VPN session is the cause or contributor to the latency issue of application session 160.

In some examples, a plurality of network features may contribute to the application performance issue of application session 160. For example, application issue identification engine 135 may determine that the performance issue of application session 160 is caused by a poor performance of wireless network 106A due to weak signal detection by AP 142A-1 (e.g., determined by a comparison of RSSI values of AP 142A-1 with a predefined RSSI threshold) and high client device connectivity to AP 142A-1 (e.g., determined by a comparison of a number of clients connected to AP 142A-1 to a predefined threshold number of clients). Alternatively, application issue identification engine 135 may determine that the application performance issue of application session 160 may be caused by a poor performance of wireless network 106A and VPN session 162 operating concurrently with application session 160. In these examples, application issue identification engine 135 may determine, from among a plurality of network features determined to be a cause or contributor to the application performance issue, one or more network features that have the most significant effect or influence towards the identified application performance issue (e.g., based on contribution values, such as Shapley Additive Explanation (SHAP) or Local Interpretable Model-Agnostic Explanations (Lime) values that specify a contribution level of a particular network feature). For example, application issue identification engine 135 may assign a contribution value to signal detection that is higher than the contribution value assigned to client connectivity to indicate that poor signal detection has a more significant effect or influence than client connectivity toward the application performance issue.

Based on determining the network feature that caused or contributed to the at least one failure condition, application issue identification engine 135 may invoke an action, such as generating a notification to an administrator device, e.g., admin device 111, that identifies the one or more network features that are the root cause or contributor to the issue of the application session or a remedial action for the issue, or automatically reconfiguring one or more components of network devices to correct the issue.

In some examples, NMS 130 may alternatively, or additionally, predict an issue with an application session, e.g., application session 160. To predict an issue with application session 160, application issue identification engine 135 may predict one or more application performance metrics and one or more network features that impact the application performance metrics based on network data of network devices that are associated with application session 160. For example, application issue identification engine 135 may obtain network data from one or more network devices associated with application session 160 over a first period of time (e.g., historical network data), such as network data from AP 142A-1, switch 146A, and/or other network devices at site 102A. Application issue identification engine 135 may train a predictive model based on the network data obtained over the first period of time. The predictive model may include supervised learning models using decision trees and gradient boosting methods, neural networks, generative pretrained transformers (GPTs), or other types of predictive models including unsupervised learning models. As one example, the predictive model may be trained to predict latency of application session 160 based on RSSI values (and/or other network data) of AP 142A-1.

Application issue identification engine 135 may then apply network data obtained at a second, subsequent period of time (e.g., current network data) to the predictive model, which outputs one or more predicted application performance metrics and one or more network features that impact the application performance metrics. For example, application issue identification engine 135 may apply as input to the predictive model current network data 137 associated with AP 142A-1 and output a predicted latency of application session 160 and which network features impact the latency of application session 160 (e.g., RSSI values of AP 142A-1). If the predicted latency is indicative of an application performance issue (e.g., based on labeled data), application issue identification engine 135 may invoke an action to prevent the predicted latency issue, such as generating a notification to an administrator device that identifies the one or more network features that impact the application performance issue or a recommended preventative action for the predicted issue, or automatically reconfiguring one or more network devices (e.g., AP 142A-1) to prevent the predicted issue.

As another example, the predictive model may be trained to predict application performance metrics of application session 160 based on information associated with one or more VPN sessions (e.g., VPN session 162) operating concurrently or would be operating concurrently with application session 160. For example, application issue identification engine 135 may input historical network data 137 comprising information of VPN session 162 operating concurrently or would be operating concurrently with application session 160 and train a predictive model to predict the latency of application session 160. In this example, the predictive model is trained to identify one or more network features that impact the latency of application session 160, such as the VPN server distance of VPN session 162. Application identification engine 135 may apply as input to the predictive model current network data 137 associated with AP 142A-1, such as client device location and VPN server location of VPN session 162 and output a predicted latency of application session 160 and which network features impact the latency of application session 160 (e.g., VPN server distance of VPN session 162). If a predicted latency is indicative of an application performance issue (e.g., based on labeled data), application issue identification engine 135 may invoke an action to prevent the predicted latency issue.

In some examples, the predictive model may incorporate Shapley Additive Explanation (SHAP), approximations of SHAP values, and/or Local Interpretable Model-Agnostic Explanations (Lime) to provide a way in which to measure the contribution of each network feature performance to the predicted issue. For example, application issue identification engine 135 may assign a value (e.g., to each network feature performance based on how much the network feature performance contributes to the predicted issue (e.g., level of contribution)). These values are computed by evaluating the predictive model's predictions for all possible subsets of the network features performance, and then taking the average difference in predictions when a particular network feature performance is added or removed from the subset. In this way, by incorporating SHAP or Lime values to the predictive model, application issue identification engine 135 may identify the network features that have the most significant effect or influence towards the predicted issue. The examples above are just some examples of application performance metrics that can be predicted by the predictive model. The predictive model may be trained to predict any application performance metric based on the performance of any network feature and/or combination of network features.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

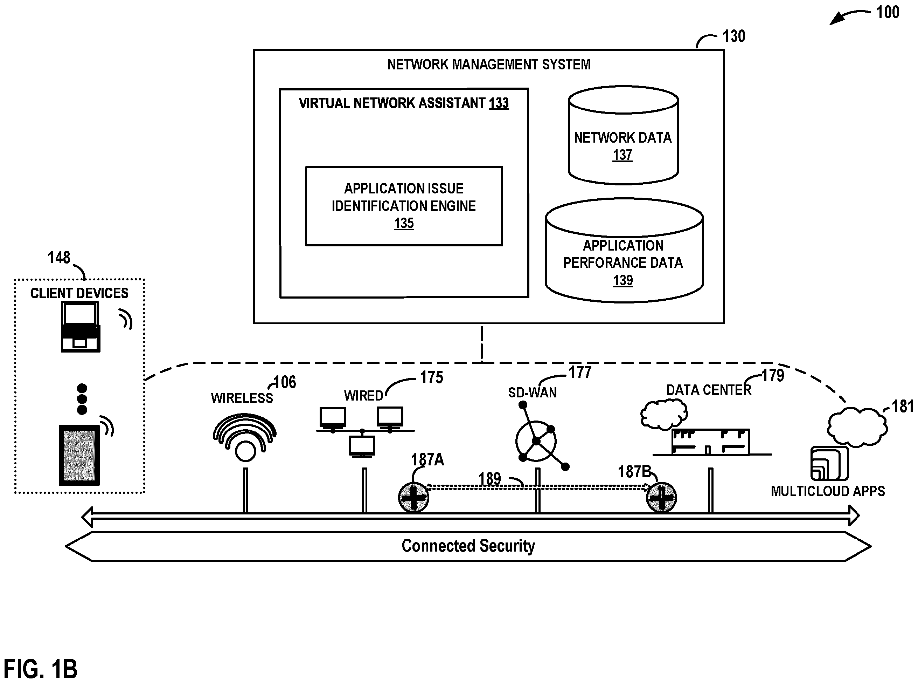

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (Wi-Fi Assurance, Wired Assurance and WAN assurance) spanning from "client," e.g., user devices 148 connected to wireless network 106 and wired LAN 175 at the network edge (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services (e.g., multi-cloud apps) 181. In general, SD-WAN 177 provides seamless, secure, traffic-engineered connectivity between "spoke" routers 187A of edge wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations that may be required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only having a user/system specify declarative requirements that specify a desired result applicable across various different types of devices, management and configuration of the network devices becomes more efficient. Further example details and techniques of an intent-based network management system are described in U.S. Patent 10,756,983, entitled "Intent-based Analytics," and U.S. Patent 10,992,543, entitled "Automatically generating an intent-based network model of an existing computer network," each of which is hereby incorporated by reference.

In accordance with the techniques described in this disclosure, application issue identification engine 135 of VNA 133 may determine the cause or contributor of an issue with an application session or predict an issue with an application session, and invoke one or more actions to remedy or prevent the issue. For example, application issue identification engine 135 of VNA 133 may perform reactive issue determination based on application performance data of an application session with an application server within data centers 179 and network data 137 received from a subset of network devices, e.g., client devices 148, AP devices supporting wireless network 106, switches 146 supporting wired LAN 178, and routers 187A, 187B supporting SD-WAN 177, that were involved in the particular application session. Alternatively, or additionally, application issue identification engine 135 of VNA 133 may perform predictive issue determination by predicting one or more application performance metrics based on network data 137 received from a subset of network devices, e.g., client devices 148, AP devices supporting wireless network 106, switches 146 supporting wired LAN 178, and routers 187A, 187B supporting SD-WAN 177, which may indicate a predicted application performance issue or failure.

In response to determining the cause or contributor to an issue of an application session or predicting the issue to an application session, application issue identification engine 135 of VNA 133 may invoke an action, such as generating a notification to an administrator device that identifies a cause or contributor of the issue of the application session or a remedial or preventative action for the predicted issue. In some examples, application issue identification engine 135 of VNA 133 may automatically reconfigure one or more components of the network devices e.g., client devices 148, AP devices supporting wireless network 106, switches 146 supporting wired LAN 178, and routers 187A, 187B supporting SD-WAN 177, to remedy or prevent the predicted issue.

In this way, VNA 133 provides wireless and/or WAN assurance for application sessions between the client devices 148 connected to wireless network 106 and wired LAN 175 and the cloud-based application services 181 that may be hosted by computing resources within data centers 179.

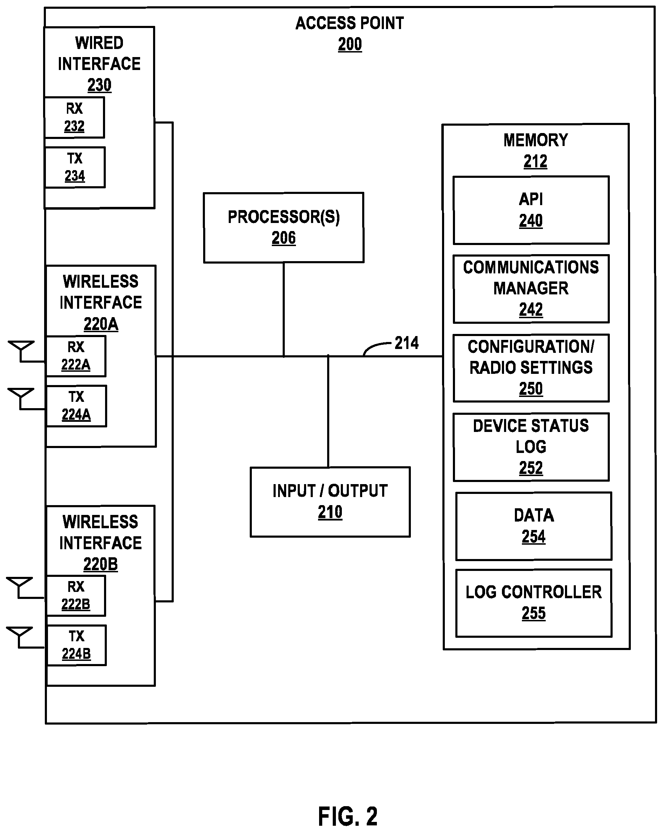

FIG. 2 is a block diagram of an example access point (AP) device 200 configured in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, encoded to a computer-readable medium (such as memory 212), such as non-transitory computer-readable media including a storage device (e.g., a disk drive, or an optical drive) or a memory (such as Flash memory or RAM) or any other type of volatile or non-volatile memory, that stores instructions to cause the one or more processors 206 to perform the techniques described herein. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Memory 212 includes one or more devices configured to store programming modules and/or data associated with operation of access point 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration/radio settings 250, a device status log 252 and data 254. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

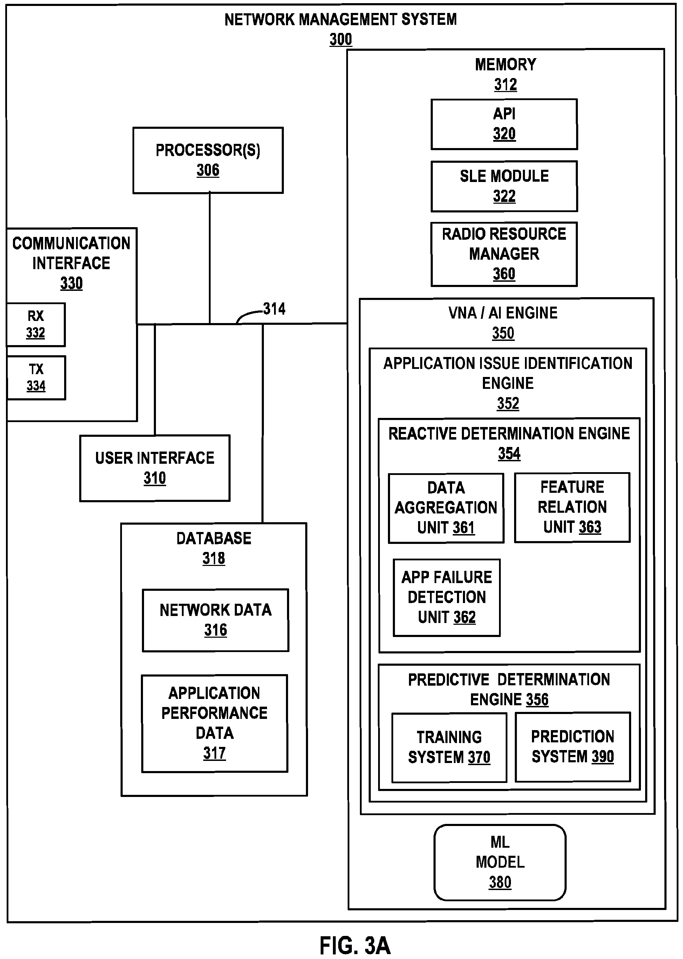

FIG. 3A is a block diagram of an example network management system (NMS) 300 configured to determine an issue or predicted issue with an application session of a cloud-based application and invoke one or more actions to remedy or prevent the issue, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics. NMS 300 analyzes this data for cloud-based management of wireless networks 106A-106N. The received data is stored as network data 316 in database 318. In some examples, NMS 300 may be part of another server shown in FIG. 1A or a part of any other server.

Processor(s) 306 execute software instructions, such as those used to define a software or computer program, encoded to a computer-readable medium (such as memory 312), such as non-transitory computer-readable media including a storage device (e.g., a disk drive, or an optical drive) or a memory (such as Flash memory or RAM) or any other type of volatile or non-volatile memory, that stores instructions to cause the one or more processors 306 to perform the techniques described herein. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource manager (RRM) 360. SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1through 148A-N currently connected to wireless network 106A. This data is transmitted to NMS 300, which executes by SLE module 322 to determine one or more SLE metrics for each UE 148A-1 through 148AN currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine 360 may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In accordance with the disclosed techniques, VNA/AI engine 350 includes application issue identification engine 352 that may determine the cause or contributor to an issue with an application session or predict an issue with an application session, and invoke one or more actions to remedy or prevent the issue.

In this example, application issue identification engine 352 includes a reactive determination engine 354 to determine the cause or contributing features to an issue of a prior application session and a predictive determination engine 356 to predict application performance metrics of an application session that may be indicative of an issue of the application session and identify one or more network features predicted to impact the application performance metrics.

Reactive determination engine 354 may obtain application performance data 317 associated with an application session (e.g., application session 160 of FIG. 1A) such as information indicating the performance the application session, such as latency, bandwidth, audio in/out, video in/out, screen share in/out, packet loss, bit rate, resolution, frames per second, feedback from users, etc. In some examples, reactive determination engine 354 may obtain application performance data from an application server hosting the application or another computing device of the application service provider via API 320. Reactive determination engine 354 may also obtain network data 316 associated with network devices associated with the application session (e.g., AP 142A-1, switch 146A, etc. of FIG. 1A).

Reactive determination engine 354 may include a data aggregation unit 361 configured to combine application performance data 317 with network data 316 associated with the application session. As one example, data aggregation unit 361 of reactive determination engine 354 may combine the application performance data 317 with network data 316 based on a timestamp of when the data was collected. For example, data aggregation unit 361 of reactive determination engine 354 may combine the application performance data 317 of a particular duration of time (e.g., the duration of time in which an issue of the application session occurred) with network data 316 of the same duration of time. As another example, data aggregation unit 361 of reactive determination engine 354 may combine application performance data 317 with network data 316 based on an identifier of a network device (e.g., a MAC address) and/or organization or site identifier. For example, data aggregation unit 361 of reactive determination engine 354 may combine the application performance data 319 associated with a MAC address of a particular client device with network data 316 associated with the client device. The examples described above are merely some examples in which data aggregation unit 361 of reactive determination engine 354 may combine application performance data 317 with network data 316, and may combine the data based on other types of association between application performance data 317 and network data 316.

Based on the application performance data 317, reactive determination engine 354 may include an application failure detection unit 362 configured to identify at least one failure condition, e.g., an issue, of the application session. For example, application failure detection unit 362 of reactive determination engine 354 may compare the application performance data 317 with a threshold that, when satisfied, indicates an issue of the application session. As one specific example, application failure detection unit 362 of reactive determination engine 354 may compare a latency measurement of an application session with a threshold (e.g., latency greater than 150ms) and determine that the latency measurement of the application session satisfies the threshold and thus indicates the application session has a latency issue.

Reactive determination engine 354 may include a feature relation unit 363 configured to relate the at least one failure condition with the performance of one or more network features determined from the network data 137 to determine the one or more network features that caused or contributed to the at least one failure condition. For example, feature relation unit 363 of reactive determination engine 354 may relate the latency issue of the application session with the performance of the wireless network determined from RSSI values of one or more network devices associated with the application session. In this example, feature relation unit 363 of reactive determination engine 354 may compare the RSSI values of a network device associated with the application session (e.g., AP 142A-1 of FIG. 1A) with a threshold (e.g., RSSI below -80 dB) that, if satisfied, indicates the network device experienced weak signal detection that contributed to poor wireless network performance of the network device, and is therefore the network feature that is the cause of the latency issue.

In some examples, a plurality of network features may contribute to the application performance issue of the application session. In these examples, reactive determination engine 354 may determine, from among a plurality of network features determined to be a contributor to the application performance issue, one or more network features that had the most significant effect or influence towards the identified application performance issue (e.g., based on weights assigned to the network features). For example, reactive determination engine 354 may assign a weight to signal detection that is higher than the weight assigned to client connectivity to indicate that a poor signal detection has a more significant effect or influence than client connectivity toward the application performance issue.

Based on determining the network feature that caused or contributed to the at least one failure condition, application reactive determination engine 354 may invoke an action, such as generating a notification to an administrator device that identifies the root cause or contributor to the issue of the application session or a remedial action for the issue, or automatically reconfiguring one or more components of the network devices to correct the issue, such as by instructing RRM engine 360 to automatically change or update configurations of one or more components of APs 142 associated with the application session.

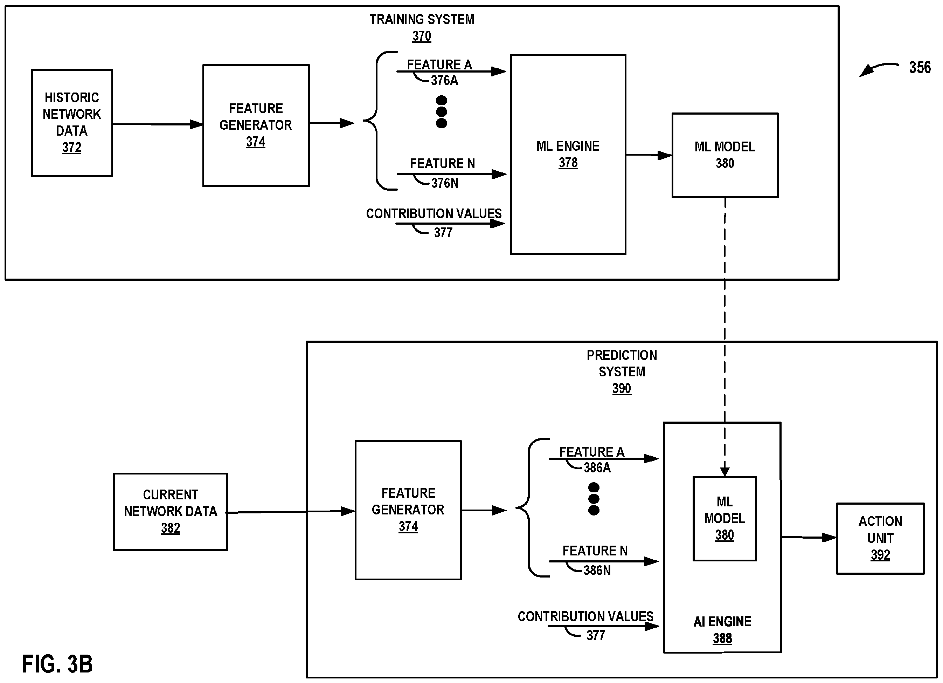

Predictive determination engine 356 may include a training system 370 configured to train a prediction model and a prediction system 390 configured to utilize the prediction model to predict application performance metrics that may indicate an issue with an application session. As further described in FIG. 3B, training system 370 may obtain historical network data 316 (obtained at a first period of time) from network devices of a network site associated with an application session and/or historical application data (obtained at the first period of time), to train a predictive model, ML model 380, to predict application performance metrics for the application session and identify one or more network features that impact the application performance metrics. In some examples, the prediction model is application agnostic. That is, training system 370 may train the prediction model with network data 316 and without application performance data 317. As further described in FIG. 3B, prediction system 390 may obtain current network data 316 (e.g., obtained at a second, subsequent period of time) and apply the current network data 316 as an input to the prediction model to predict an application performance metric for the application session that may indicate a predicted occurrence of an issue of the application session and identify one or more network features that impact the application performance metrics.

In some examples, ML model 380 may comprise a supervised ML model that is trained, using training data comprising pre-collected, labeled network data received from network devices (e.g., client devices, APs, switches and/or other network nodes), to identify root causes of connectivity issues at one or more network device of the subset of network devices associated with a particular application session. The supervised ML model may comprise one of a logistical regression, naive Bayesian, support vector machine (SVM), decision trees and gradient boosting methods, neural networks, generative pretrained transformers (GPTs), or other types of learning models, or the like. In other examples, ML model 380 may comprise an unsupervised ML model. Although not shown in FIG. 3A, in some examples, database 318 may store the training data and VNA/AI engine 350 or a dedicated training module may be configured to train ML model 380 based on the training data to determine appropriate weights across the one or more network features of the training data.

FIG. 3B illustrates an example of the training system 370 and the prediction system 390 of predictive determination engine 356 in greater detail. Training system 370 includes ML engine 378 configured to use supervised or unsupervised machine learning techniques to generate ML model 380 to predict an application performance metric (e.g., latency) that may indicate a predicted occurrence of an issue of an application session based on the performance of a network feature determined from the network data.

In one example, ML engine 378 uses supervised machine learning techniques using decision trees and gradient boosting methods to train the ML model 380 to predict an application performance metric. For example, feature generator 374 may generate network features 376A-376N based on historic network data 372, e.g., network data obtained from one or more network devices associated with an application session over a first period of time. Network features 376 may provide input variables for ML model 380 to make predictions about a target variable (e.g., application performance metric of an application session). Network features 376 may represent, for example, network features that may be the most relevant to the performance of an application session. For example, a weak radio signal of a client device's connection to an access point (e.g., RSSI below -80 dB) may be a contributing factor in an application session experiencing latency issues. Moreover, an access point that operates with a radio frequency channel that suffers from interference may additionally, or alternatively, be a contributing factor in the application session experiencing latency issues. In some examples, a distance between a client device and a VPN server for a VPN session operating concurrently with the application session may be a contributing factor in the application session experiencing latency issues. Other network features used to predict a latency issue may include an average RSSI of a client device, a number of client devices of a site (e.g., active and/or inactive), a download speed (mbps) of a site, a last round-trip time (RTT) of an access point, the RTT of a site), a number of APs of a site, a WiFi retry rate of a client device, interference of a radio channel, a radio channel, client device received bytes, an average CPU utilization for an application session, the WiFi version, a number of client device streams, radio channel bandwidth, radio channel band, and other features indicative of the performance of the network.

Based on network features 376, ML engine 378 may train the ML model 380 to predict a target variable, e.g., application performance metric of an application session, by learning decision rules inferred from network features 376. In some examples, ML engine 378 may incorporate contribution values 377, e.g., Shapley Additive Explanation (SHAP) or Local Interpretable Model-Agnostic Explanations (Lime) values, to provide a way in which to measure the contribution of each network feature 376 to the predicted application performance issue. For example, predictive determination engine 356 may assign a value to each network feature 376 based on how much the network feature contributes to the predicted issue (e.g., level of contribution). As one example, training system 370 of predictive determination engine 356 may assign a first contribution value to network feature 376A (e.g., RSSI value) that indicates network feature 376A has a first level of contribution to a latency issue of an application session. Training system 370 of predictive determination engine 356 may assign a second contribution value to network feature 376B (e.g., radio utilization information) that indicates network feature 376B has a second level of contribution to the latency issue of the application session. As another example, training system 370 of predictive determination engine 356 may assign a third contribution value to network performance feature 376C (e.g., VPN server distance information) that indicates network feature 376C has a third level of contribution to the latency issue of the application session. Each of the contribution values may comprise of a different contribution value that represents a level of contribution by a corresponding network feature to the latency issue (or other performance issue) of the application session. For example, the third contribution value assigned to network feature 376C (e.g., VPN server distance) may be greater than the first contribution value assigned to network feature 376A (e.g., RSSI value) which may indicate that network feature 376C has a greater impact to the latency issue of the application session than network feature 376A.

Contribution values 377 are computed by evaluating the predictive model's predictions for all possible subsets of the network features, and then taking the average difference in predictions when a particular network feature is added or removed from the subset. In this way, by incorporating contribution values 377 to the ML model 380, predictive determination engine 356 may identify the network features 376 that have the most significant effect or influence towards the predicted issue.

After training, ML model 380 may be deployed for use by AI engine 388 of prediction system 390. Feature generator 374 of prediction system 390 may then process current network data 382 (e.g., network data obtained from the one or more network devices at the network site over a second, subsequent period of time) into network features 386A-386N. Network features 386 may represent the same type of network features as were used by ML engine 378, e.g., network features 376A-376N, to generate ML model 380 based on historic network data 372, but may represent different values.

AI engine 388 applies network features 386 (and in some examples, contribution values 377) to ML model 380 as input. AI engine 388 subsequently receives output from ML model 380 that may include a predictive model to predict application performance metrics (e.g., latency of an application session) that may indicate an occurrence of an issue during an application session. For instance, network feature 386A may include an RSSI value indicating the signal strength of a client device (e.g., UE 148A-1) connected to an access point (e.g., AP 142A-1) and is input into ML model 380, which outputs a prediction of latency of an application session that would involve AP 142A-1.

If the one or more predicted application performance metrics indicate an issue with an application session, action unit 392 may invoke an action, such as generating a notification to an administrator device that identifies the root cause or contributor to the issue of the application session or a remedial action for the issue, or automatically reconfiguring one or more components of the network devices to correct the issue, such as to instruct RRM engine 360 to automatically change or update configurations of one or more APs 142 associated with the application session.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

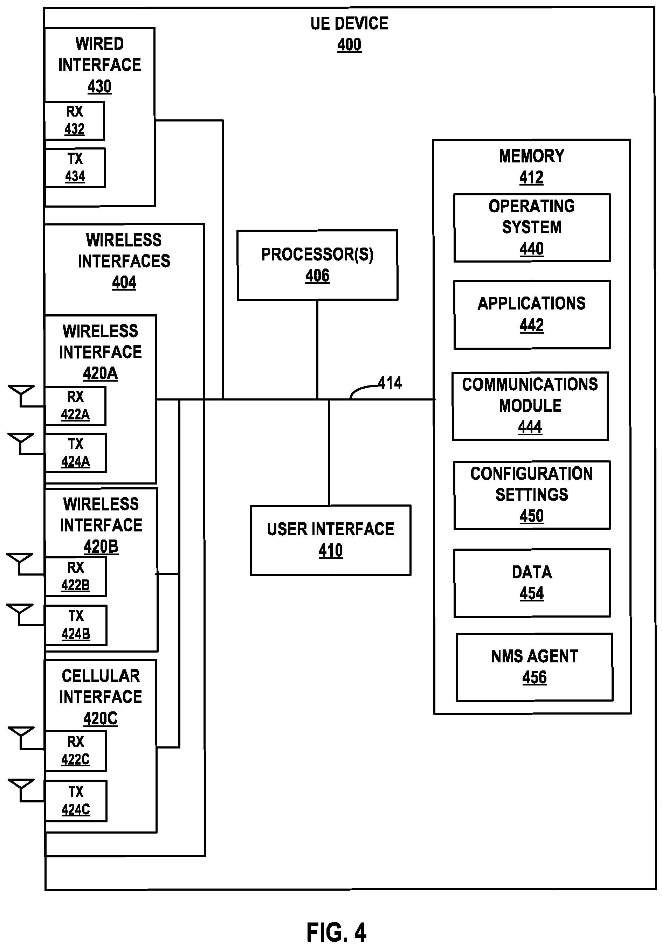

FIG. 4 shows an example user equipment (UE) device 400. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In accordance with techniques described in this disclosure, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second, and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, encoded to a computer-readable medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Memory 412 includes one or more devices configured to store programming modules and/or data associated with operation of UE 400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data 454 may include, for example, a status/error log including a list of events specific to UE 400. The events may include a log of both normal events and error events according to a logging level based on instructions from NMS 130. Data 454 may include any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130. In some examples, data 454 may include the location of UE 400 for a given VPN session. In some examples, data 454 may include a VPN server distance determined based on the location of UE 400 and a location of a VPN server (e.g., server 128A of FIG. 1A) for a given VPN session between UE 400 and the VPN server.

As described herein, UE 400 may measure and report network data from data 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

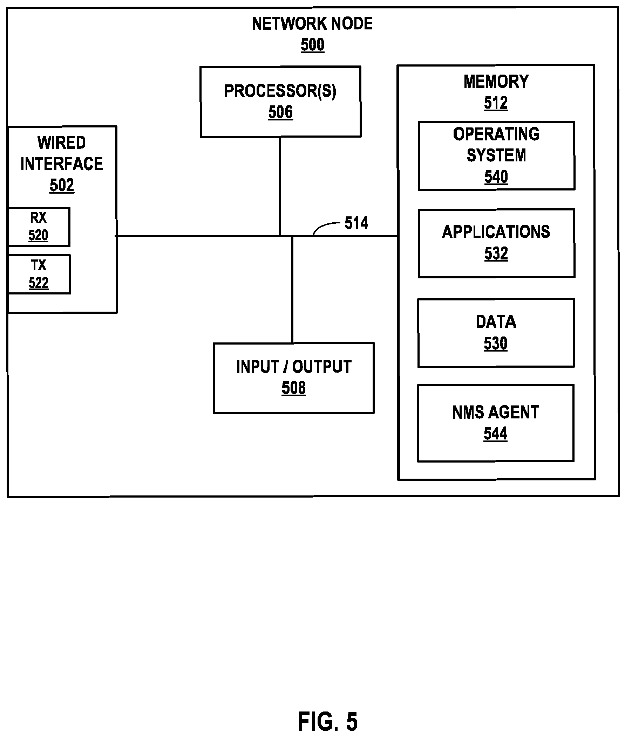

FIG. 5 is a block diagram illustrating an example network node 500 configured according to the techniques described herein. In one or more examples, the network node 500 implements a device or a server attached to the network 134 of FIG.1A, e.g., switches 146, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, one or more processor(s) 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data 530. Data 530 may include a system log and/or an error log that stores event data, including behavior data, for network node 500. In some examples, data 530 may include the location of network node 500 (e.g., operating as a VPN server) for a given VPN session. In some examples, data 530 may include a VPN server distance determined based on the location of network node 500 and a location of a client device (e.g., UE 148A-1 of FIG. 1A) for a given VPN session between network node 500 and the client device. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices, within a wired network edge. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or other module running on network node 500.

The data collected and reported by network node 500 may include periodically-reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer. In some examples, NMS agent 544 may periodically create a package of the statistical data according to a second periodic interval, e.g., every 3 minutes. The collected and sampled data periodically reported in the package of statistical data may be referred to herein as "oc-stats."

In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

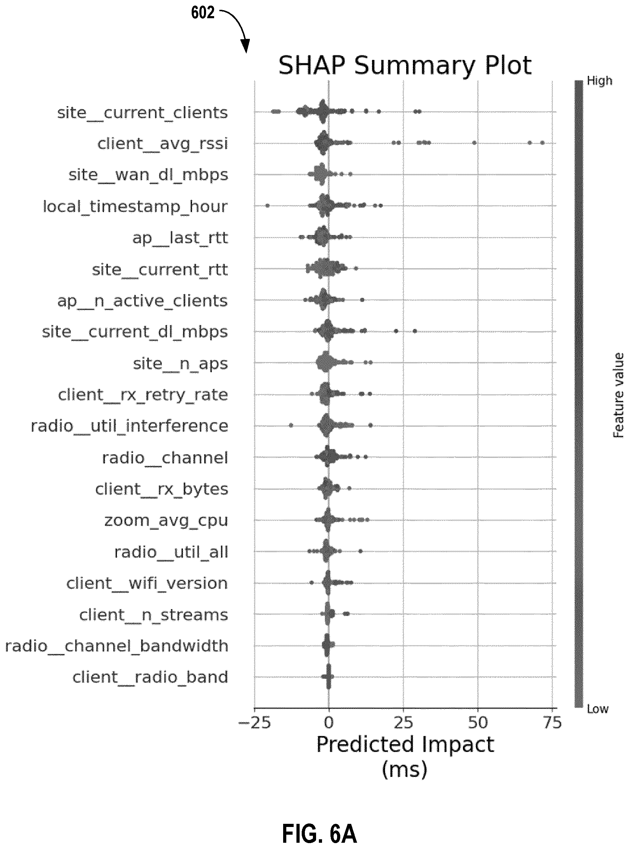

FIGS. 6A-6C illustrate examples of outputs of the predictive model, in accordance with the techniques of this disclosure. The summary plot 602 of FIG. 6A may represent an example output of predictive determination engine 356 of FIG. 3B. In this example, summary plot 602 of FIG. 6A may include a plot of features that have incorporated Shapley values (e.g., contribution values 377 of FIG. 3B) to provide a way in which to measure the contribution of each network feature to the predicted issue. For example, "site_current_clients" in summary plot 602 may specify a value that indicates this network feature has the most significant effect or influence on the predicted issue. Similarly, "client_radio_band" may specify a value that indicates this network feature has a less significant effect or influence on the predicted issue. In this example, each network feature may indicate a predicted value of latency that may affect the user experience of an application session (e.g., predicted impact (ms)).

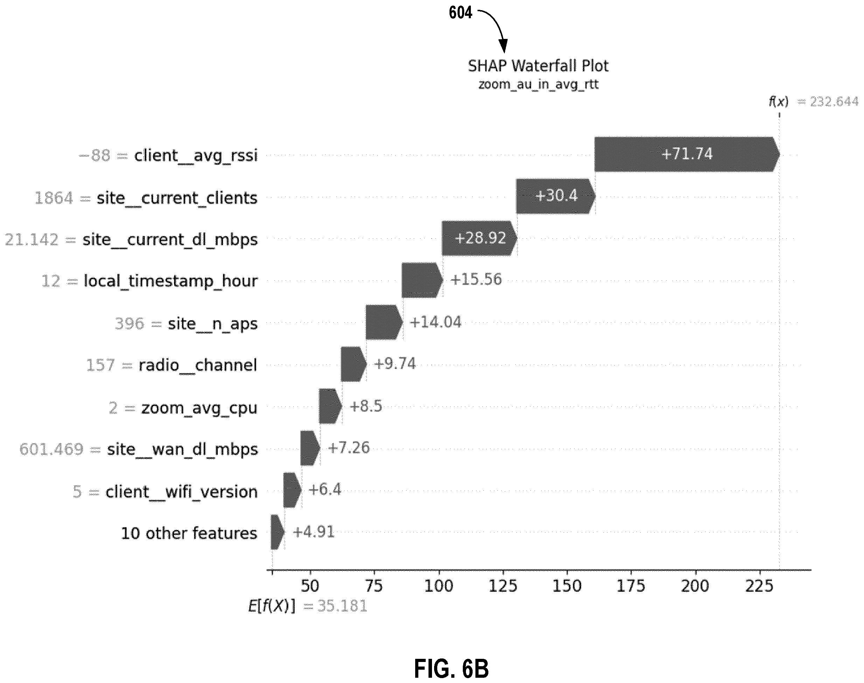

The waterfall plot 604 of FIG. 6B may represent another example output of predictive determination engine 356 of FIG. 3B. In this example, waterfall plot 604 may include a plot of network features that have incorporated Shapley values to provide a way in which to measure the contribution of each network feature to the predicted issue. In this example, "client_avg_rssi" in waterfall plot 604 may specify a client RSSI value of -88 dB and an impact of the client RSSI has the highest contribution of 71.74ms to the total 232.644 ms predicted latency of the application. Similarly, "client_wifi_version" in waterfall plot 604 may specify a client WiFi version of 5 GHz and an impact of the WiFi version to the predicted latency of the application as 6.4 ms to the total predicted latency. In this example, the client WiFi version has a less significant effect or influence on the predicted latency issue to the application session than the client RSSI.

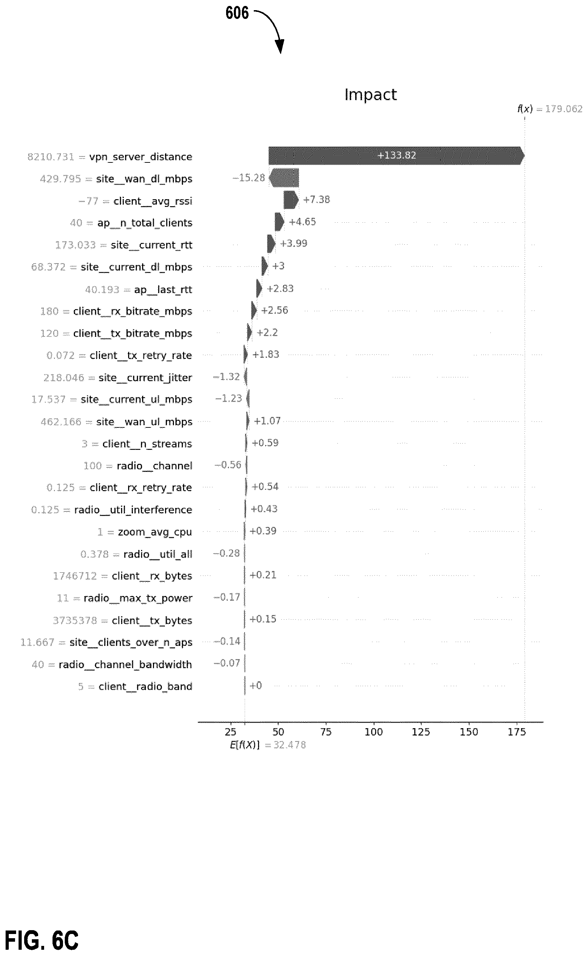

FIG. 6C illustrates an example of another example output of the predictive model, in accordance with the techniques of this disclosure. The summary plot 606 of FIG. 6C may represent an example output of predictive determination engine 356 of FIG. 3B. In this example, summary plot 606 of FIG. 6C may include a plot of features that have incorporated Shapley values (e.g., contribution values 377 of FIG. 3B) to provide a way in which to measure the contribution of each network feature to the predicted issue. For example, "vpn_server_distance" in summary plot 606 may specify a distance value of 8210.731 km and an impact of the VPN server distance to the predicted latency of the application session as 133.82 ms to the total 179 ms. Similarly, "site_wan_dl_mbps" of summary plot 606 may be specify a site-wide average download speed value of 429.795 mbps and an impact of the download speed to the predicted latency of the application session as -15.28 ms. In this example, the VPN server distance has a greater effect or influence on the predicted latency to the application session than the download speed.

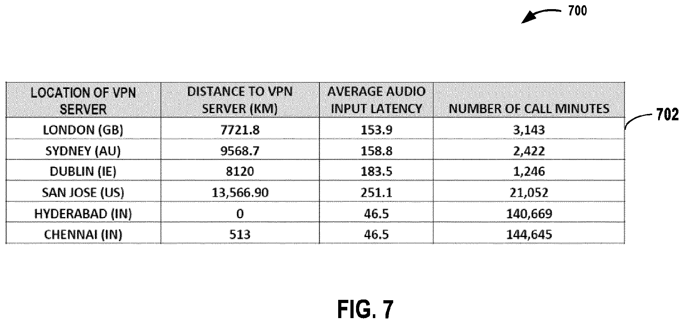

FIG. 7 illustrates an example relation between the performance of an application session and one or more VPN sessions operating concurrently with the application session, in accordance with techniques described in this disclosure. The example table 700 illustrated in FIG. 7 is described with respect to application issue identification engine 135 of NMS 130 of FIGS. 1A-1B and application issue identification engine 352 of NMS 300 of FIGS. 3A-3B.

In the example of FIG. 7, table 700 may include information associated with one or more VPN sessions, such as the distance to a VPN server (in kilometers), an average audio input latency related with the VPN server distance, and a number of call minutes of the one or more VPN sessions. Each row of table 700 may represent a particular application session that has a VPN session operating concurrently with the corresponding application session. In this example, NMS 130 may obtain information associated with a particular VPN session operating concurrently with a particular application session, e.g., application session 702. For example, a VPN session between a client device and a VPN server located in London may operate concurrently with application session 702. In this example, NMS 130 may obtain a location of the VPN server located in San Jose, California, and a location of the client device (e.g., Hyderabad, India) connected to the VPN server located in San Jose, and determine a VPN server distance of 7,721.8 km. NMS 130 may obtain application performance data associated with application session 702, such as latency. In this example, NMS 130 may obtain a latency value specifying a latency of 251.1. NMS 130 may relate the VPN server distance with the latency data. For example, NMS 130 may relate the VPN server distance with the latency data that is obtained while the VPN session is active. NMS 130 may obtain other information associated with application session 702, such as the number of call minutes, and relate this information with the VPN server distance.

NMS 130 may compare the VPN server distance values of a VPN session operating concurrently with application session 1002 with a threshold (e.g., VPN server distance greater than a predefined VPN server distance) that, when satisfied, indicates the VPN session that is operating concurrently with the application session is a cause or contributor to the application performance issue.

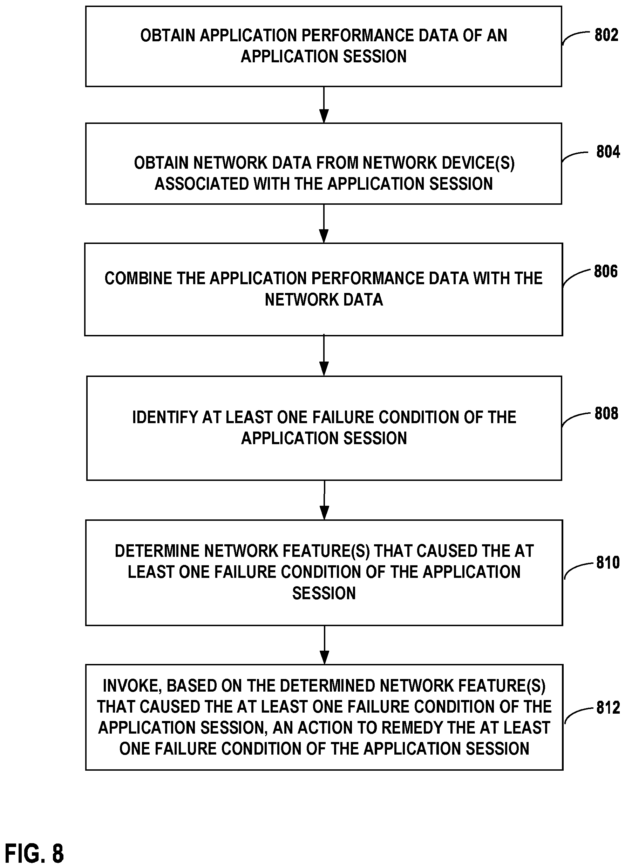

FIG. 8 is a flowchart illustrating an example operation of reactive issue determination, in accordance with one or more techniques of the disclosure. The example operation of FIG. 8 is described with respect to application issue identification engine 135 of NMS 130 of FIGS. 1A-1B and application issue identification engine 352 of NMS 300 of FIGS. 3A-3B.

In this example, NMS 130/300 may obtain application performance data associated with an application session (802). For example, application issue identification engine 135/352 of NMS 130/300 may obtain application performance data indicating the performance an application session, such as latency, bandwidth, audio in/out, video in/out, screen share in/out, packet loss, bit rate, resolution, frames per second, feedback from users, etc. In some examples, application issue identification engine 135 of NMS 130 may obtain application performance data from an application server or another computing device of an application service provider.

NMS 130/300 may also obtain network data associated with one or more network devices associated with the application session (804). For example, application issue identification engine 135/352 of NMS 130/300 may obtain network data including, for example, one or more service level expectation (SLE) metrics, events, and/or other information indicating the performance or other characteristic of the network from network devices associated with the application session. In some examples, application issue identification engine 135/352 of NMS 130/300 may obtain information associated with a VPN session operating concurrently with the application session, such as the location of a client device and a location of a VPN server of the VPN session. In these examples, application issue identification engine 135/352 of NMS 130/300 may determine, based on information associated with the VPN session, the distance between the client device and the VPN server of the VPN session.

NMS 130/300 may combine the application performance data and the network data associated with the application session (806). For example, data aggregation unit 361 of NMS 300 may combine the application performance data with the network data based on a timestamp of the data, an identifier associated with the data (e.g., network device address, organization or site identifier), or other association between the application performance data and the network data.

Based on the application performance data and/or the network data, NMS 130/300 may identify at least one failure condition, e.g., an issue, of the application session (808). For example, application failure detection unit 362 of NMS 300 may compare the application performance data and/or network data with a threshold that, if satisfied, indicates an issue with the application session.

NMS 130/300 may determine one or more network features that caused the at least one failure condition of the application session (810). For example, feature relation unit 363 of NMS 300 may relate the at least one failure condition with a performance of one or more network features to determine the one or more network features that caused or contributed to the at least one failure condition. For instance, feature relation unit 363 of NMS 300 may relate a latency issue of the application session with wireless network performance of an access point associated with the application session. In this example, the performance of the wireless network is determined based on RSSI values indicating the signal strength of a client device connected to the access point. Feature relation unit 363 of NMS 300 may compare the RSSI values of the access point with a threshold (e.g., RSSI below -80 dB) that, if satisfied, indicates the access point had a weak connection to the client device that contributed to the poor wireless network performance, and therefore is the network feature determined to be the cause or contributor to the latency issue of the application session. As another example, feature relation unit 363 of NMS 300 may relate a latency issue of the application session with a VPN server distance between a client device and a VPN server of a VPN session (e.g., VPN session 162 of FIG. 1A) operating concurrently with the application session. Feature relation unit 363 of NMS 300 may compare the VPN server distance with a threshold (e.g., VPN server distance greater than a predefined threshold) that, if satisfied, indicates the VPN session is determined to be a cause or contributor to the latency issue of the application session.

Based on determining the network feature that caused or contributed to the at least one failure condition, NMS 130/300 may invoke an action to remedy the at least one failure condition (812). For example, application issue identification engine 135/352 of NMS 130/300 may generate a notification to an administrator device that identifies a root cause or contributor of the issue of the application session or a remedial action for the issue. In some examples, application issue identification engine 135/352 of NMS 130/300 may automatically reconfigure one or more components of the network devices to correct the issue, such as by instructing RRM engine 360 of NMS 300 to automatically change or update configurations of one or more components of the network devices.

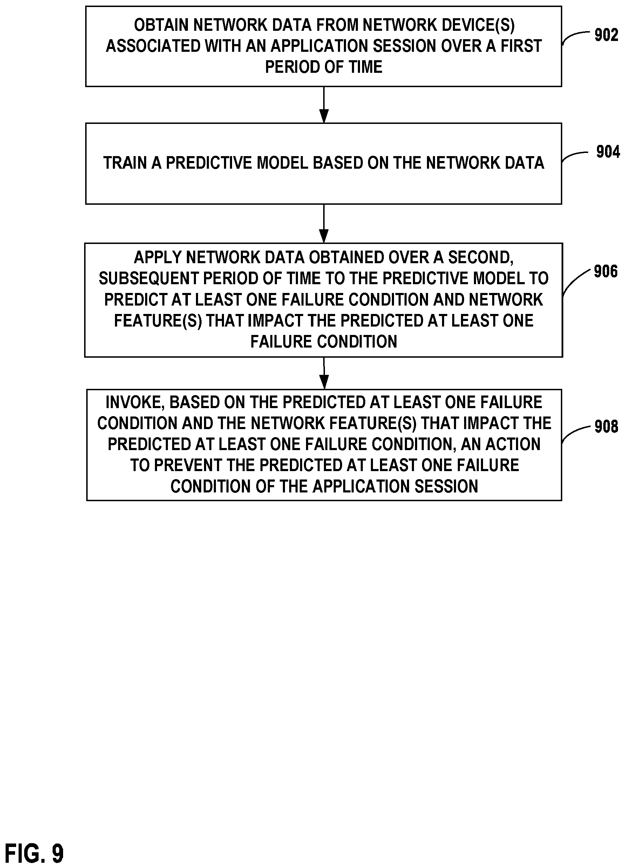

FIG. 9 is a flowchart illustrating an example operation of predictive issue determination, in accordance with one or more techniques of the disclosure. The example operation of FIG. 9 is described with respect to application issue identification engine 135 of NMS 130 of FIGS. 1A-1B and application issue identification engine 352 of NMS 300 of FIGS. 3A-3B.

In this example, NMS 130/300 may obtain network data from one or more network devices associated with an application session over a first period of time (e.g., historical network data) (902). NMS 130/300 may train a predictive model based on the network data obtained over the first period of time (904). For example, predictive determination engine 356 of NMS 300 may generate network features based on historic network data. Network features may provide input variables for the predictive model to make predictions about a target variable (e.g., application performance metric of an application session) by learning decision rules inferred from the network features.

In some examples, the predictive model may incorporate Shapley Additive Explanation (SHAP) or Local Interpretable Model-Agnostic Explanations (Lime) to provide a way in which to measure the contribution of each network feature to the predicted issue. For example, predictive determination engine 356 of NMS 300 may assign a value (e.g., to each network feature based on how much the network feature contributes to the predicted issue. These values are computed by evaluating the predictive model's predictions for all possible subsets of the network features, and then taking the average difference in predictions when a particular network feature is added or removed from the subset. In this way, by incorporating SHAP or LIME values to the predictive model, predictive determination engine 356 of NMS 130/300 may identify the network features that have the most significant effect or influence towards the predicted issue.

NMS 130/300 may then apply network data obtained at a second, subsequent period of time (e.g., current network data) to the predictive model to predict at least one failure condition of the application session and one or more network features that impact the predicted at least one failure condition (906). For example, predictive determination engine 356 of NMS 300 may process current network data into network features and applies the network features to the predictive model as input, which in turn outputs one or more predicted application performance metrics that may indicate at least one failure condition and one or more network features that impact the application performance metrics.

NMS 130 may invoke, based on the predicted at least one failure condition and the one or more network features that impact the predicted at least one failure condition, an action to prevent the predicted at least one failure condition (908). For example, if the one or more predicted application performance metrics indicate an issue with an application session, NMS 130/300 may invoke an action, such as generating a notification to an administrator device that identifies the root cause or contributor to the predicted issue of the application session or a remedial action for the predicted issue. In some examples, NMS 130/300 may automatically reconfigure one or more components of the network devices to prevent the predicted issue.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data medium comprising instructions that, when executed, cause a processor to perform one or more of the methods described above. For example, the computer-readable data medium may store such instructions for execution by a processor. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable media may comprise a storage media, such as non-transitory media. The term "non-transitory" may indicate that the storage medium is not embodied in a carrier wave or a propagated signal. In certain examples, a non-transitory storage medium may store data that can, over time, change (e.g., in RAM or cache). A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective, there has now been described feature identification of an issue of an application session: A network management system (NMS) is described that determines a cause or contributor of an issue of an application session or predicts an issue with the application session and invokes one or more actions to remedy or prevent the issue. NMS is configured to determine one or more network features that cause and/or contribute to an issue of an application session that has already occurred (referred to herein as "reactive issue determination") and/or predict an issue with an application session and one or more network features that impact the performance of the application session (referred to herein as "predictive issue determination"), and invoke one or more actions to remedy or prevent the issue, in accordance with one or more techniques of this disclosure.

Further examples of feature combinations taught by the present disclosure are set out in the following numbered clauses:
1. A network management system comprising:
   a memory; and
   one or more processors coupled to the memory and configured to:
      obtain, from an application server, application performance data of an application session;
      obtain, from one or more network devices associated with the application session, network data;
      combine the application performance data with the network data;
      identify, based on the application performance data or network data, at least one failure condition of the application session;
      determine one or more network features that caused the at least one failure condition; and
      invoke, based on the determined one or more network features that caused the at least one failure condition, an action to remedy the at least one failure condition of the application session.
2. The network management system of clause 1, wherein to combine the application performance data with the network data, the one or more processors are configured to combine the application performance data with the network data based on one or more of a timestamp, a network device identifier, an organization identifier, or a site identifier.
3. The network management system of clause 1 or 2, wherein to determine one or more network features that caused the at least one failure condition, the one or more processors are configured to:
   determine, based on the network data, Received Signal Strength Indicator (RSSI) values of the one or more network devices associated with the application session;
   compare the RSSI values to a threshold; and
   determine, based on the comparison, that a wireless network performance of the one or more network devices is a network feature of the one or more network features that caused the at least one failure condition of the application session.
4. The network management system of any preceding clause, wherein to determine one or more network features that caused the at least one failure condition, the one or more processors are configured to:
   determine, based on the network data, a distance between a client device and a virtual private network (VPN) server for a VPN session operating concurrently with the application session;
   compare the distance between the client device and the VPN server to a threshold;
   determine, based on the comparison, whether the VPN session is a network feature of the one or more network features that cause the at least one failure condition of the application session.
5. The network management system of any preceding clause, wherein to invoke the action to remedy the at least one failure condition, the one or more processors are configured to perform at least one of:
   generate a notification comprising at least one of an indication that the one or more network features are a cause of the at least one failure condition, or a recommended action to remedy the at least one failure; or
   reconfigure one or more components of the one or more network devices associated with the application session.
6. The network management system of any preceding clause, wherein the one or more network features that caused the at least one failure condition of the application session comprises:
   a wireless network performance of the one or more network devices;
   a wired network performance of the one or more network devices; or
   a distance between a client device and a virtual private network (VPN) server for a VPN session operating concurrently with the application session.
7. A network management system comprising:
   a memory; and
   one or more processors coupled to the memory and configured to:
      obtain network data from one or more network devices associated with an application session over a first period of time;
      train a predictive model based on the network data to predict at least one failure condition of the application session and one or more network features that impact the predicted at least one failure condition;
      apply network data from the one or more network devices obtained over a second period of time, subsequent to the first period of time, to the predictive model to predict at least one failure condition of the application session over the second period of time and one or more network features that impact the predicted at least one failure condition; and
      invoke, based on the predicted at least one failure condition and the one or more network features that impact the predicted at least one failure condition, an action to prevent the predicted at least one failure condition of the application session.
8. The network management system of clause 7, wherein to train the predictive model based on the network data, the one or more processors are configured to:
   generate, based on the network data obtained over the first period of time, the one or more network features associated with the application session.
9. The network management system of clause 7 or 8, wherein to train the predictive model based on the network data, the one or more processors are further configured to:
   apply, to each of the one or more network features, a value indicating a level of contribution of a corresponding network feature.
10. The network management system of clause 9, wherein the value comprises a Shapley Additive Explanation (SHAP) value.
11. The network management system of clause 9 or 10, wherein the value comprises a Local Interpretable Model-Agnostic Explanations (Lime) value.
12. The network management system of any of clauses 7-11, wherein to invoke the action to prevent the predicted issue of the application session, the one or more processors are configured to perform at least one of:
   generate a notification comprising at least one of an indication of the one or more network features that impact the predicted at least one failure condition of the application session or a recommended action to prevent the predicted at least one failure condition of the application session; or
   reconfigure one or more components of the one or more network devices associated with the application session.
13. The network management system of any of clauses 7-12, wherein the one or more network features that impact the predicted at least one failure condition of the application session comprises:
   a wireless network performance of the one or more network devices;
   a wired network performance of the one or more network devices; or
   a distance between a client device and a virtual private network (VPN) server for a VPN session operating concurrently with the application session.
14. A method comprising:
   obtaining, by a computing system, network data from one or more network devices associated with an application session over a first period of time;
   training, by the computing system, a predictive model based on the network data to predict at least one failure condition of the application session and one or more network features that impact the predicted at least one failure condition;
   applying, by the computing system, network data from the one or more network devices obtained over a second period of time, subsequent to the first period of time, to the predictive model to predict at least one failure condition of the application session over the second period of time and one or more network features that impact the predicted at least one failure condition; and
   invoking, by the computing system and based on the predicted at least one failure condition of the application session and the one or more network features that impact the predicted at least one failure condition, an action to prevent the at least one failure condition of the application session.
15. The method of clause 14, wherein training the predictive model based on the network data comprises:
   generating, based on the network data obtained over the first period of time, the one or more network features associated with the application session.
16. The method of clause 14 or 15, wherein training the predictive model based on the network data further comprises:
   applying, to each of the one or more network features, a value indicating a level of contribution of a corresponding network feature.
17. The method of clause 16, wherein the value comprises a Shapley Additive Explanation (SHAP) value.
18. The method of clause 16 or 17, wherein the value comprises a Local Interpretable Model-Agnostic Explanations (Lime) value.
19. The method of any of clauses 14-18, wherein invoking the action to prevent the predicted issue of the application session comprises at least one of:
   generating a notification comprising at least one of an indication of the one or more network features that impact the predicted at least one failure condition of the application session or a recommended action to prevent the predicted at least one failure condition of the application session; or
   reconfiguring one or more components of one or more network devices associated with the application session.
20. The method of any of clauses 14-19, wherein the one or more network features that impact the predicted at least one failure condition of the application session comprises:
   a wireless network performance of the one or more network devices;
   a wired network performance of the one or more network devices; or
   a distance between a client device and a virtual private network (VPN) server for a VPN session operating concurrently with the application session.

## Claims

1. A network management system comprising:
a memory; and
one or more processors coupled to the memory and configured to:
obtain, from an application server, application performance data of an application session;
obtain, from one or more network devices associated with the application session, network data;
combine the application performance data with the network data;
identify, based on the application performance data or network data, at least one failure condition of the application session;
determine one or more network features that caused the at least one failure condition; and
invoke, based on the determined one or more network features that caused the at least one failure condition, an action to remedy the at least one failure condition of the application session.

2. The network management system of claim 1, wherein to combine the application performance data with the network data, the one or more processors are configured to combine the application performance data with the network data based on one or more of a timestamp, a network device identifier, an organization identifier, or a site identifier.

3. The network management system of any of claims 1-2, wherein to determine one or more network features that caused the at least one failure condition, the one or more processors are configured to:
determine, based on the network data, Received Signal Strength Indicator, RSSI, values of the one or more network devices associated with the application session;
compare the RSSI values to a threshold; and
determine, based on the comparison, that a wireless network performance of the one or more network devices is a network feature of the one or more network features that caused the at least one failure condition of the application session.

4. The network management system of any of claims 1-2, wherein to determine one or more network features that caused the at least one failure condition, the one or more processors are configured to:
determine, based on the network data, a distance between a client device and a virtual private network, VPN, server for a VPN session operating concurrently with the application session;
compare the distance between the client device and the VPN server to a threshold;
determine, based on the comparison, whether the VPN session is a network feature of the one or more network features that cause the at least one failure condition of the application session.

5. The network management system of any of claims 1-4, wherein to invoke the action to remedy the at least one failure condition, the one or more processors are configured to perform at least one of:
generate a notification comprising at least one of an indication that the one or more network features are a cause of the at least one failure condition, or a recommended action to remedy the at least one failure; or
reconfigure one or more components of the one or more network devices associated with the application session.

6. The network management system of any of claims 1-5, wherein the one or more network features that caused the at least one failure condition of the application session comprises:
a wireless network performance of the one or more network devices;
a wired network performance of the one or more network devices; or
a distance between a client device and a virtual private network, VPN, server for a VPN session operating concurrently with the application session.

7. A network management system comprising:
a memory; and
one or more processors coupled to the memory and configured to:
obtain network data from one or more network devices associated with an application session over a first period of time;
train a predictive model based on the network data to predict at least one failure condition of the application session and one or more network features that impact the predicted at least one failure condition;
apply network data from the one or more network devices obtained over a second period of time, subsequent to the first period of time, to the predictive model to predict at least one failure condition of the application session over the second period of time and one or more network features that impact the predicted at least one failure condition; and
invoke, based on the predicted at least one failure condition and the one or more network features that impact the predicted at least one failure condition, an action to prevent the predicted at least one failure condition of the application session.

8. The network management system of claim 7, wherein to train the predictive model based on the network data, the one or more processors are configured to:
generate, based on the network data obtained over the first period of time, the one or more network features associated with the application session.

9. The network management system of claim 7, wherein to train the predictive model based on the network data, the one or more processors are configured to:
apply, to each of the one or more network features, a value indicating a level of contribution of a corresponding network feature.

10. The network management system of claim 9, wherein the value comprises a Shapley Additive Explanation value.

11. The network management system of claim 9, wherein the value comprises a Local Interpretable Model-Agnostic Explanations value.

12. The network management system of any of claims 7-11, wherein to invoke the action to prevent the predicted issue of the application session, the one or more processors are configured to perform at least one of:
generate a notification comprising at least one of an indication of the one or more network features that impact the predicted at least one failure condition of the application session or a recommended action to prevent the predicted at least one failure condition of the application session; or
reconfigure one or more components of the one or more network devices associated with the application session.

13. The network management system of any of claims 7-12, wherein the one or more network features that impact the predicted at least one failure condition of the application session comprises:
a wireless network performance of the one or more network devices;
a wired network performance of the one or more network devices; or
a distance between a client device and a virtual private network, VPN, server for a VPN session operating concurrently with the application session.

14. A method as performed by any of the network management systems of claims 1-13.

15. A computer-readable medium encoded with instructions for causing one or more programmable processors to become configured to carry out the method of claim 14 or to become configured as the network management system of any of claims 1-13.
